# EUROPÄISCHE PATENTSCHRIFT

(11) **EP 3 573 824 B1**
(45) Veröffentlichungstag und Bekanntmachung des Hinweises auf die Patenterteilung: **07.04.2021**
(21) Anmeldenummer: 18703696.7
(22) Anmeldetag: 19.01.2018
(51) Int. Cl.: B32B 5/02, B32B 5/12, B32B 5/26, B32B 7/06, B32B 7/12, B32B 27/12, B63H 9/067

(54) **TRANSFERSYSTEM FÜR EIN VERBUNDMATERIAL**
TRANSFER SYSTEM FOR A COMPOSITE MATERIAL
SYSTÈME DE TRANSFERT POUR MATÉRIAU COMPOSITE

(30) Priorität: 24.01.2017 DE 102017101301
(43) Veröffentlichungstag der Anmeldung: 04.12.2019
(73) Patentinhaber: Dimension-Polyant GmbH, 47906 Kempen (DE)
(72) Erfinder: MADSEN, Kenneth, Bristol, Rhode Island 02809-1506 (US); WALCOFF, Hale, Adamsville, Rhode Island 02801 (US)
(74) Vertreter: Schneiders & Behrendt Bochum
(86) Internationale Anmeldenummer: PCT/EP2018/051337
(87) Internationale Veröffentlichungsnummer: WO 2018/138015

(56) Entgegenhaltungen:
- WO-A1-2014/047663
- WO-A2-00/23320
- US-A- 4 454 184
- US-A- 4 945 848
- US-A1- 2013 280 476

## Beschreibung

Die Erfindung betrifft die Verwendung eines Verbundmaterials aus einem Non-Woven als Trägermaterial und einer textilen Lage aus Verstärkungsfasern, wobei die Verstärkungsfasem aus Mono- oder Multifilamenten oder Tapes bestehen und dasTrägermaterial mit der Lage aus Verstärkungsfasern adhäsiv verbunden ist, als Transfersystem zur Applikation auf Oberflächen zur Erhöhung der Rauigkeit und/oder Griffigkeit. Das Verbundmaterial ist insbesondere für die Verwendung in steifen Composites, wie z.B. Surfboards, Skis, etc., sowie in flexiblen Composites wie z.B. Segeltuchlaminaten und -membranen geeignet.

Non-Wovens (Vliesstoffe) werden vielfach verwandt, um die Eigenschaften von Flächengebilden zu verbessern. Sie erhöhen beispielsweise die Bruch- und Reißfestigkeit, verhindern die Fortpflanzung von Rissen, erhöhen die Schlagzähigkeit und verbessern das Erscheinungsbild. Die Offenporigkeit der Non-Wovens wirkt sich dabei positiv auf die Permeation der im Composite enthaltenen Bindemittel aus.

Verstärkungsfasern werden in Verpackungsmaterialien und technischen Produkten eingesetzt, um die Zugfestigkeit, Schlagzähigkeit, Steifheit und Verarbeitungskompatibilität zu erhöhen. In Kombination mit Non-Wovens ergeben sich Verbesserungen, die aus der Kombination der Eigenschaften beider Materialien herrühren. Ein Verbund aus Polyesterfolien und Verstärkungsfasern hat sich beispielsweise im Segelsport bewährt.

Sogenannte Scrims werden auch eingesetzt, um die Rauigkeit und Griffigkeit von Oberflächen zu verbessern. So werden Scrims beispielsweise zur Verbesserung der Griffigkeit in Surfboards auf die Oberfläche aufgebracht.

Faserverstärkungen werden auf Flächengebilde in der Regel unmittelbar bei der Herstellung aufgebracht, indem die entsprechenden Fasern maschinell in ein Klebstoffbett eingebracht werden. Die Einbringung einer Faserverstärkung in ein Klebstoffbett ist in der Regel mit Ungenauigkeiten verbunden, die dem angestrebten Zweck, beispielsweise der Aufnahme von Zugkräften in einem Segel, entgegenstehen. Hier wäre eine Möglichkeit zur Einbringung einer Faserverstärkung in das Flächengebilde mit präziser Ausrichtung und in straffer Form wünschenswert.

Aus der WO 2013/148696 A1 ist ein aus mehreren verklebten Faserschichten gefertigtes Gitterwerk bekannt, das zur Modifizierung von Oberflächen eingesetzt werden kann. Die Herstellung ist aufwendig und die Haftung der verschiedenen Faserschichten aneinander ist begrenzt JPS5857193B offenbart die Verwendung eines Verbundmaterials zur Applikation des Verbundes auf Oberflächen zur Erhöhung der Griffigkeit, wobei das Verbundmaterial eine Gummischicht als Trägermaterial und eine textile Lage aus eine Gewebe aufweist.

Es besteht ein Bedarf an Systemen, mit denen ein Gitterwerk aus Verstärkungsfasern einfach in applikationsfähiger Form hergestellt und auf eine Oberfläche transferiert werden kann. Ein solches System soll insbesondere sicherstellen, dass die Aufbringung der Verstärkungsfasern präzise, d.h. ohne Verzug und in straffer Form erfolgen kann und zu einer dauerhaften Fixierung führt. Das System soll auf Oberflächen verschiedenster Art anwendbar und anpassbar sein.

Dieses Ziel wird mit einem Transfersystem für ein Verbundmaterial der eingangs genannten Art erreicht, bei dem die Verstärkungsfasern aus Mono- oder Multifilamenten oder Tapes bestehen und das als Träger fungierende Non-Woven mit der Lage der Verstärkungsfasern adhäsiv verbunden ist. Zur einfacheren Handhabung kann das Verbundmaterial mit einer Deckfolie versehen sein, die abziehbar ist Erfindungsgemäß wird das Verbundmaterial als Transfersystem zur Applikation auf Oberflächen zur Erhöhung der Rauigkeit und/oder Griffigkeit verwendet.

Vorzugsweise weist die textile Lage einander kreuzende Verstärkungsfasern auf.

Das Transfersystem kann auch eine Lage parallel verlaufender Verstärkungsfasern, vorzugsweise in Maschinenrichtung, aufweisen, sowie eine Kombination aus parallel verlaufenden und einander kreuzenden Verstärkungsfasern. In diesem Fall verlaufen die Fasern beispielsweise in einem Winkel von 0°, +45° und -45° zur Maschinenrichtung. Von 0° und 90° abweichende Winkel werden als off-angle bezeichnet.

Unter einer Deckfolie wird eine Folie verstanden, die dem Schutz des Verbundes aus Non-Woven und textilen Verstärkungsfasern dient und die vor, während oder nach der Applikation des Verbundes davon ohne weiteres entfernt werden kann. Die Deckfolie ist somit in den Verbund nicht mit einbezogen. Das Transfersystem kann eine oder zwei Deckfolien aufweisen, in letzterem Fall eine auf jeder Seite. Bei ausreichender Formstabilität des Verbundmaterials kann auf eine Deckfolie verzichtet werden.

Bei dem Verbundmaterial sind das Trägermaterial (Non-Woven) und die applizierte textile Lage aus Verstärkungsfasern adhäsiv mit einander verbunden. Der Verbund aus Non-Woven und textiler Lage aus Verstärkungsfasern kann thermisch bei einer Temperatur von weniger als 180°C erzeugt werden. Besteht das Non-Woven aus thermoplastischen Kunststoffen, wie z.B. Fasern aus Polyamid, Polyester, Polyolefin, etc, die bei Erwärmung eine ausreichende Klebeeigenschaft entwickeln, kann diese Klebeeigenschaft für die Fixierung genutzt werden. In anderen Fällen, beispielsweise bei Carbonfasern oder mineralischen Fasern (Glasfasern, Steinfasern), ist das Trägermaterial vor oder während der Applizierung mit einem geeigneten Binder zu versehen. Die Applizierung der textilen Lage aus Verstärkungsfasern ohne Bindemittel erfolgt bei erhöhter Temperatur. Das Trägermaterial soll dabei seine wesentlichen Eigenschaften nach Abkühlung wiedererlangen und die Verstärkungsfasern sollen bei dem Verklebungsprozess nicht nachteilig beeinflusst werden. Dies gewährleistet eine ansprechende und glatte Oberfläche auf der Trägermaterialseite nach der Applikation.

Die Verstärkungsfasern bestehen aus Multifilamenten, d.h. einer Vielzahl von einzelnen Fasern, die einen im Wesentlichen parallelen Verlauf aufweisen Die Fasern können verdrillt sein, müssen dies aber nicht. Multifilamente aus einer Vielzahl von Einzelfasern haben den Vorteil, dass die Kreuzungspunkte flach gehalten werden können und damit der Verbund eine geringe Stärke aufweist. Die Verwendung von Monofilamenten und tapeförmigen Materialien ist ebenfalls möglich.

Für die Deckfolie können im Grunde genommen beliebige Materialien verwandt werden, sofern diese Freigabeeigenschaften (release-Eigenschaften) haben und problemlos von dem Verbund abziehbar sind. In Frage kommen beispielsweise Polyolefine, insbesondere Polyethylen und Polypropylen Solche Deckfolien haben beispielsweise eine Stärke von 0,1 bis 0,4 mm. Deckfolien können auf nur einer oder auf beiden Seiten des Verbundes aus Non-Woven und textiler Lage angeordnet sein und erlauben, das Verbundmaterial als Bahn zu fertigen und aufzurollen. Es ist ferner möglich, die Lage aus Verstärkungsfasern beidseitig mit einem Non-Woven zu versehen. In diesem Fall kann die Deckfolie einseitig oder beidseitig angeordnet sein.

Die Deckfolie kann beispielsweise als Grundlage bei der Herstellung verwandt werden, auf der der Verbund aus Non-Woven und Verstärkungsfasern hergestellt wird. Es ist aber auch möglich, die Deckfolie und den Verbund im Herstellungsprozess zusammen zu führen.

Das Trägermaterial (Non-Woven) hat vorzugsweise eine Stärke von 0,020 bis 0,070 mm und insbesondere von 0,030 bis 0,060 mm. Er soll seine Klebeigenschaften bei einer Temperatur im Bereich von 80 bis 180°C entfalten, insbesondere bei etwa 100°C. Bevorzugt weist das Trägermaterial ein thermoplastisches Fasermaterial auf, das bei der Erwärmung verklebt, insbesondere ein Polyamid.

Einander kreuzende Verstärkungsfasern der textilen Lage sind vorzugsweise in Einzellagen angeordnet, die Scharen parallel geführter Filamente aufweisen. Der Abstand der Filamente beträgt dabei 0,3 bis 11,5 cm, insbesondere ca. 2 cm. Um eine Gitterstruktur zu erhalten, sind die verschiedenen Lagen so angeordnet, dass sich die Scharen kreuzen, vorzugsweise off-angle (nicht im rechten Winkel). Bevorzugt sind Kreuzungswinkel von 40 bis 140°, ausgenommen der Bereich 85 bis 95°. Der Abstand und der Kreuzungswinkel ergeben sich aus den Festigkeitsanforderungen wie auch aus der Garnstärke selbst, d.h. bei Verwendung von Garn mit einem hohen Titer kann der Abstand der einzelnen Stränge voneinander hoch sein und umgekehrt. Die Strangdenierdichte kann beispielsweise 18.000 dpi (denier per inch) betragen, wobei sich dies auf beispielsweise 18 Stränge pro Zollbreite von jeweils 1.000 den verteilen kann. In der Regel ist eine Strangdenierdichte von 500 bis 7.500 dpi in jeder Garnlage ausreichend, insbesondere eine solche von 1.000 bis 6.000 dpi.

Als Materialien für die Verstärkungsfasern kommen übliche in Frage, wie sie insbesondere in der Compositherstellung, im Segelsport, oder für Verpackungszwecke eingesetzt werden, etwa Aramid, Carbon, Polyester, Polyolefin, Polyamid. Bewährt haben sich insbesondere Multifilamentgarne aus UHMWPE (z.B. Dyneema®) und Aramid (z.B. Technora Black®, Twaron®). Der Einsatz von tapeförmigem Material auf Basis UHMWPE (z.B. EnduMax®) ist ebenfalls möglich. Entsprechend der Zahl der Filamentscharen besteht die textile Lage aus der entsprechenden Anzahl Einzellagen.

In dem Transfersystem bilden die Verstärkungsfasern in der textilen Lage eine Gitterstruktur aus. Gitterstruktur bedeutet in diesem Zusammenhang, dass sich zumindest zwei Scharen von Filamenten kreuzen. Es können aber auch weitere Scharen vorhanden sein, beispielsweise eine Schar, die in Maschinenrichtung verläuft und zwei weitere Scharen, die in einem Winkel von 60 und 120° kreuzen.

Das Transfersystem kann mit einer geringen Stärke hergestellt werden, beispielsweise mit einer Stärke von weniger als 0,3 mm. Die Stärke des Verbundes aus Non-Woven und Verstärkungsfasern kann dabei weniger als 0,2 mm betragen. Die jeweilige Stärke richtet sich allerdings nach den Anforderungen für den jeweiligen Einsatzzweck.

In der Regel hat der Verbund des Transfersystems eine Stärke von 0,2 bis 0,4 mm, gemessen an den Kreuzungspunkten mit ein oder zwei Deckfolien. Für den Verbund selbst ergeben sich Stärken von 0,15 bis 0,25 mm, ebenfalls an den Kreuzungspunkten.

Für die Fertigung von Segeln ist ein sehr geringes Flächengewicht bei hoher Zugfestigkeit erforderlich. Ein erfindungsgemäß gefertigter Verbund - ohne Deckfolie - kann beispielsweise ein Flächengewicht von 21 g/m² aufweisen. Solche geringen Flächengewichte für eine Faserverstärkung sind mit in einem Klebstoffbett verlegten Verstärkungsfasern nur schwer zu erreichen. Im Allgemeinen liegt das Flächengewicht des Verbundes bei 10 bis 30 g/m².

Das Transfermaterial ist einfach in großen Mengen zu fertigen und kann beispielsweise als Rollenmaterial mit Breiten von bis zu 2,0 m und Längen bis zu 1.000 m gefertigt werden. Das Rollenmaterial kann beliebig zugeschnitten werden und ist aufgrund der hohen Flexibilität des Verbundes auf gekrümmte Oberflächen anwendbar. Insbesondere kann es für die Herstellung von Segeltuch und Segeln eingesetzt werden sowie für die Erhöhung der Oberflächenrauigkeit von Oberflächen, beispielsweise Surfboards.

Bei der Applikation wird der Verbund auf bekannter Art und Weise in einem Kleberbett verlegt, wobei die Deckfolie, sofern vorhanden auf der Klebeseite vorab entfernt wird und eine eventuelle zweite Deckfolie nach der Aufbringung auf das Kleberbett.

Das Non-Woven des Transfersystems behält seine Porosität - und damit seine Durchlässigkeit für Luft und Klebstoff oder Harz - auch im Verbund. Dies erlaubt es, bei der Laminatherstellung mittels Vakuum, einem üblichen Verfahren, Luft aus dem Verbund herauszusaugen. Dies führt zu einem gleichmäßigeren Laminat. Gleichzeitig kann Klebstoff oder Harz in das Laminat hineingesaugt (infudiert) werden.

Infusionsprozesse spielen bei der Herstellung von Faserverbundstrukturen eine große Rolle. Das erfindungsgemäße Transfersystem hat sich als gut brauchbar für die Herstellung von Faserverbundstrukturen mittels Harzinfusion erwiesen.

### Beispiel

Ein Transfersystem wurde mit ein und zwei Deckfolien aus Polypropylen, die als Abziehfolien dienten, sowie einem Non-Woven auf Polyamidbasis als Trägermaterial und Verstärkungsfasern hergestellt. Für die Verstärkungsfasern wurden Technora Black®-Fasern mit 750 den und einem Winkel von +22° und -22° zur Maschinenrichtung bei einem Abstand von 1,9 cm verwandt. Die gemessenen Stärken an den Kreuzungspunkten, mit einer Faserlage und des Trägermaterials alleine sowie die Flächengewichte mit und ohne Deckfolien sind in der nachstehenden Tabelle angegeben. Das Muster hatte ein Flächengewicht des Verbundes von 21 g/m². Die angegebenen Werte sind Mittelwerte aus drei Messungen.

**Tabelle**

| Stärken in mm | | | | |
|---|---|---|---|---|
| | an Kreuzungspunkten | mit einer Faserlage | Kunststofffilm | Gewicht |
| 2 Deckfolien | 0,238 | 0,189 | 0,127 | 94,0 g/m² |
| 1 Deckfolie | 0,217 | 0,158 | 0,091 | 57,0 g/m² |
| Verbund | 0,160 | 0,114 | 0,045 | 21,0 g/m² |

## Patentansprüche

1. Verwendung eines Verbundmaterials aus
(a) einem Non-Woven als Trägermaterial und
(b) einer textilen Lage aus Verstärkungsfasern,
wobei die Verstärkungsfasern aus Mono- oder Multifilamenten oder Tapes bestehen und das Trägermaterial mit der Lage aus Verstärkungsfasern adhäsiv verbunden ist, als Transfersystem zur Applikation auf Oberflächen zur Erhöhung der Rauigkeit und/oder Griffigkeit.

2. Verwendung nach Anspruch 1, **dadurch gekennzeichnet, dass** die textile Lage einander kreuzende Verstärkungsfasern aufweist.

3. Verwendung nach Anspruch 1 oder 2, **dadurch gekennzeichnet, dass** das Non-Woven eine Stärke von 0,020 bis 0,070 mm hat, vorzugsweise von 0,030 bis 0,060 mm.

4. Verwendung nach einem der Ansprüche 1 bis 3, **dadurch gekennzeichnet, dass** der Verbund aus Non-Woven und textiler Lage aus Verstärkungsfasern thermisch bei einer Temperatur von weniger als 180°C erzeugt ist.

5. Verwendung nach einem der Ansprüche 1 bis 3, **dadurch gekennzeichnet, dass** das Trägermaterial und die Verstärkungsfasern über ein Bindemittel miteinander verklebt sind.

6. Verwendung nach einem der vorstehenden Ansprüche, **dadurch gekennzeichnet, dass** das Trägermaterial Fasern aus einem thermoplastischen Material, vorzugsweise aus einem Polyamid enthält.

7. Verwendung nach einem der vorstehenden Ansprüche, **dadurch gekennzeichnet, dass** die textile Lage aus Verstärkungsfasern ein Gitterwerk aus einander kreuzenden Scharen von parallel zueinander verlaufenden Verstärkungsfasern gebildet ist, die in zwei oder mehr Einzellagen angeordnet sind.

8. Verwendung nach Anspruch 7, **dadurch gekennzeichnet, dass** die Verstärkungsfasern einer Schar in einem Abstand von 0,3 bis 11,5 cm zueinander verlaufen.

9. Verwendung nach Anspruch 7 oder 8, **dadurch gekennzeichnet, dass** die Verstärkungsfasern einander off-angle kreuzen.

10. Verwendung nach einem der vorstehenden Ansprüche, **dadurch gekennzeichnet, dass** die Verstärkungsfasern aus Bündeln oder Bändern von Aramid-, Carbon-, Polyolefin-, Polyamid- und/oder Polyesterfasern bestehen.

11. Verwendung nach einem der vorstehenden Ansprüche, **dadurch gekennzeichnet, dass** die Multifilamente der Verstärkungsfasern verdrillt sind.

12. Verwendung nach einem der vorstehenden Ansprüche, **gekennzeichnet durch** ein oder zwei Deckfolien mit Freigabeeigenschaften.

13. Verwendung nach einem der vorstehenden Ansprüche, wobei das Transfersystem in Form eines Rollenmaterials vorliegt.

14. Verwendung nach Anspruch 1 zur Herstellung von Segeltuch und Segeln.

## Claims

1. Use of a composite material comprising:
(a) a nonwoven as carrier material and
(b) a textile layer of reinforcing fibres,
wherein the reinforcing fibres consist of mono- or multifilaments or tapes and the carrier material is adhesively bonded to the layer of reinforcing fibres, as a transfer system for application to surfaces for increasing the roughness and/or grip.

2. The use according to claim 1, **characterised in that** the textile layer comprises mutually intersecting reinforcing fibres.

3. The use according to claim 1 or 2, **characterised in that** the nonwoven has a thickness of 0.020 to 0.070 mm, preferably of 0.030 to 0.060 mm.

4. The use according to one of claims 1 to 3, **characterised in that** the composite of nonwoven and textile layer of reinforcing fibres is thermally produced at a temperature of less than 180 °C.

5. The use according to one of claims 1 to 3, **characterised in that** the carrier material and the reinforcing fibres are bonded to one another by means of a binding agent.

6. The use according to one of the preceding claims, **characterised in that** the carrier material contains fibres of a thermoplastic material, preferably of a polyamide.

7. The use according to one of the preceding claims, **characterised in that** the textile layer of reinforcing fibres by a latticework of mutually intersecting groups of reinforcing fibres extending parallel to one another, which are arranged in two or more individual layers.

8. The use according to claim 7, **characterised in that** the reinforcing fibres of a group extend at a spacing of 0.3 to 11.5 cm from one another.

9. The use according to claim 7 or 8, **characterised in that** the reinforcing fibres cross each other off-angle.

10. The use according to one of the preceding claims, **characterised in that** the reinforcing fibres consist of bundles or tapes of aramid, carbon, polyolefin, polyamide and/or polyester fibres.

11. The use according to one of the preceding claims, **characterised in that** the multifilaments of the reinforcing fibres are twisted.

12. The use according to one of the preceding claims, **characterised by** one or two cover sheets having release properties.

13. The use according to one of the preceding claims, wherein the transfer system is present in the form of a roll material.

14. The use according to claim 1 for the manufacture of sailcloth and sails.

## Revendications

1. Utilisation d'un matériau composite, présentant :
(a) un non-tissé comme matériau support et
(b) une couche textile en fibres de renforcement,
les fibres de renforcement étant constituées de monofilaments ou multifilaments ou rubans et le matériau support étant relié de manière adhésive à la couche de fibres de renforcement, comme système de transfert pour l'application sur des surfaces afin d'augmenter la rugosité et/ou l'adhérence.

2. Utilisation selon la revendication 1, **caractérisée en ce que** la couche textile comporte des fibres de renforcement qui s'entrecroisent.

3. Utilisation selon la revendication 1 ou 2, **caractérisée en ce que** le non-tissé présente une épaisseur de 0,020 à 0,070 mm, de préférence de 0,030 à 0,060 mm.

4. Utilisation selon l'une des revendications 1 à 3, **caractérisée en ce que** le composite constitué de non-tissé et d'une couche textile en fibres de renforcement est généré de manière thermique à une température d'au moins 180 °C.

5. Utilisation selon l'une des revendications 1 à 3, **caractérisée en ce que** le matériau support et les fibres de renforcement sont collés l'un à l'autre par le biais d'un liant.

6. Utilisation selon l'une des revendications précédentes, **caractérisée en ce que** le matériau support contient des fibres en un matériau thermoplastique, de préférence en un polyamide.

7. Utilisation selon l'une des revendications précédentes, **caractérisée en ce que** la couche textile en fibres de renforcement est formé d'un treillis de groupes s'entrecroisant de fibres de renforcement s'étendant parallèles les unes aux autres, qui sont disposées en deux couches individuelles ou plus.

8. Utilisation selon la revendication 7, **caractérisée en ce que** les fibres de renforcement d'un groupe s'étendent à une distance de 0,3 à 11,5 cm les unes des autres.

9. Utilisation selon la revendication 7 ou 8, **caractérisée en ce que** les fibres de renforcement s'entrecroisent selon un angle non droit.

10. Utilisation selon l'une des revendications précédentes, **caractérisée en ce que** les fibres de renforcement sont constituées de faisceaux ou bandes de fibres d'aramide, de carbone, de polyoléfine, de polyamide et/ou de polyester.

11. Utilisation selon l'une des revendications précédentes, **caractérisée en ce que** les multifilaments des fibres de renforcement sont torsadés.

12. Utilisation selon l'une des revendications précédentes, **caractérisée par** une ou deux feuilles de recouvrement avec des propriétés antiadhésives.

13. Utilisation selon l'une des revendications précédentes, dans laquelle le système de transfert se présente sous la forme d'un matériau en rouleau.

14. Utilisation selon la revendication 1 pour la fabrication de toile à voile et de voiles.
